# EUROPÄISCHE PATENTSCHRIFT

(11) **EP 0 222 138 B1**
(45) Veröffentlichungstag und Bekanntmachung des Hinweises auf die Patenterteilung: **06.04.1994**
(21) Anmeldenummer: 86113622.4
(22) Anmeldetag: 02.10.1986
(51) Int. Cl.: C08J 9/42, C08L 21/02, C09K 21/02

(54) **Schwer entflammbarer Polyurethan-Schaumstoff**
Flame resistant polyurethane foam
Mousse de polyuréthane difficilement inflammable

(30) Priorität: 11.10.1985 DE 3536371
(43) Veröffentlichungstag der Anmeldung: 20.05.1987
(73) Patentinhaber: METZELER SCHAUM GMBH, D-87700 Memmingen (DE)
(72) Erfinder: Heitmann, Ulrich, Dr., D-8940 Memmingen (DE)
(74) Vertreter: Seibert, Hannelore

(56) Entgegenhaltungen:
- US-A- 3 227 666
- US-A- 3 355 316
- US-A- 4 439 472
- CHEMICAL ABSTRACTS, Band 91, Nr. 24, 10. Dezember 1979, Seiten 297-298,Zusammenfassung Nr. 197770j, Columbus, Ohio, US; & JP-A-79 85 209 (TOYO RUBBERINDUSTRY CO., LTD) 06-07-1979
- CHEMICAL ABSTRACTS, Band 83, Nr. 24, 15. Dezember 1975, Seite 67,Zusammenfassung Nr. 194600c, Columbus, Ohio, US; & JP-A-75 101 498 (DAIDO STEELSHEET Mfg. CO., LTD; M.T.P. KASEI CO., LTD) 12-08-1975
- CHEMICAL ABSTRACTS, Band 86, Nr. 24, 13. Juni 1977, Seite 64, ZusammenfassungNr. 172720b, Columbus, Ohio, US; & JP-A-77 28 598 (MATSUSHITA ELECTRIC WORKS,LTD) 03-03-1977

## Beschreibung

Die Erfindung bezieht sich auf einen schwer entflammbaren, elastischen und offenzelligen Polyurethan-Schaumstoff, der mit einer Mischung aus einem Elastomer-Latex und einem flammhemmenden Additiv behandelt ist, das im Bereich von 0 bis 80 Gew.-% aus Aluminium-Oxid-Hydrat besteht.

Derartige schwer entflammbare Polyurethan-Schaumstoffe sind beispielsweise aus der DE-A-28 56 081 sowie aus der US-A-4,288,559 bzw. der US-A-4,439,472 bekannt. Danach wird der Schaumstoff mit einer Mischung aus natürlichem oder synthetischem Latex sowie aus einer Suspension aus Aluminium-Hydroxid oder Aluminium-Oxid-Hydrat behandelt, um damit die Flammresistenz zu erhöhen.

Bei einem derart schwer entflammbar ausgerüsteten Polyurethan-Schaumstoff laufen bei einer Inbrandsetzung oder einer Beaufschlagung mit einer Brandquelle bei steigenden Temperaturen im wesentlichen die nachfolgend beschriebenen Mechanismen ab.

Zunächst spaltet die Aluminiumverbindung oberhalb einer Temperatur von 200 °C Wasser ab, das eine Kühlung bewirkt und damit bereits zu einem Verlöschen des Brandes führen kann. Steigt die Temperatur jedoch weiter an, so wird in der 2. Stufe der Tränkanteil Latex karbonisiert, so daß sich ein gegen die Flammen widerstandsfähiges Kohle-Schaumstoff-Gerüst bildet. Bei einem noch weiteren Ansteigen der Temperatur brennt dann jedoch das Kohlegerüst, so daß schließlich lediglich ein Gerüst aus Aluminium-Oxid stehen bleibt.

Dieses Gerüst ist aber sehr instabil, daß heißt es trägt sich nicht selbst, so daß bei der geringsten Belastung ein vollständiges Kollabieren erfolgt. Die einzelnen Stufen laufen unterhalb einer Temperatur von 800 °C ab. Bei noch höheren Temperaturen gibt es nach dem bisher bekannten Verfahren keinen weitergehenden Schutz für derartige Polyurethan-Schaumstoffe mehr.

Hiervon ausgehend liegt der Erfindung die Aufgabe zugrunde, einen schwer entflammbaren, elastischen und offenzelligen Polyurethan-Schaumstoff anzugeben, der auch höheren Temperaturen widersteht und insbesondere bei diesen Temperaturen eine stabilisierte Konfiguration aufweist.

Zur Lösung dieser Aufgabe ist erfindungsgemäß vorgesehen, daß das flammhemmende Additiv einen Anteil von mindestens 20 Gew.-% aus einem Füllstoff in Form von Blähton oder Mikroglaskugeln bzw. Kurzglasfasern in einer solchen Zusammensetzung aufweist, daß in einem Temperaturbereich zwischen 300 und 800 °C ein Schmelz- oder Sinterprozeß abläuft.

Mit derartigen Füllstoffen, die selbst nicht brennen, wird erreicht, daß in einem Brandfall bei einer Temperatur, bei der das eingangs erwähnte Kohlegerüst aus dem karbonisierten Latex verbrennt, das restliche stehenbleibende Gerüst mechanisch stabilisiert wird.

Dabei ist es möglich, daß Blähton als alleiniges flammhemmendes Additiv eingesetzt ist.

Ein derart ausgerüsteter Polyurethan-Schaumstoff kann dann zweckmäßigerweise in dünnen Bahnen als Abdeckmaterial für hochelastische Schaumstoffpolster, beispielsweise für Sitzauflagen in Kraftfahrzeugen oder Flugzeugen, verwendet werden.

Geeignet für die Herstellung eines derartigen schwer entflammbaren Materials sind alle sog. Weichschäume aus Polyurethan, d.h. flexible und im wesentlichen offenzellige oder auch retikulierte Polyurethan-Schäume. Bevorzugt sind Polyester- oder Polyether-Urethan-Schaum mit einem Raumgewicht von 10-50 kg/m³.

Zur Imprägnierung des Polyurethan-Schaums sind im Prinzip alle vernetzbaren Elastomere geeignet, die in Form ihrer Latices mit einem Feststoffgehalt von 30-70, insbesondere 40-60 Gew.-% eingesetzt werden. Geeignete Elastomere sind beispielsweise Naturkautschuk oder Polychloroprenkautschuk.Vorzugsweise können auch karboxylgruppenhaltige Elastomere verwendet werden, die mit Zinkoxid oder Mangnesiumoxid vernetzt werden können.

Zur Imprägnierung des Polyurethan-Schaums wird eine Mischung aus den vorerwähnten Latices sowie der genannten flammhemmenden Additive eingesetzt. Dabei kann das flammhemmende Additiv in Form Aluminium-Oxid-Hydrat und dem erfindungsgemäßen Füllstoff in Form von Kurzglasfasern oder Mikroglaskugeln mit einem Anteil von mindestens 20 % gegenüber dem Aluminium-Oxid-Hydrat in etwa der ein- bis fünffachen Gewichtsmenge, bezogen auf den Feststoffgehalt des Latex, eingearbeitet werden.

Die so erhaltene Mischung zur Behandlung des Polyurethan-Schaums liegt dann in Form einer Dispersion oder Suspension mit einem Feststoffgehalt von 40-80 % vor. Die Menge der Mischung, mit der der Polyurethan-Schaum behandelt wird, richtet sich im wesentlichen nach den Anforderungen hinsichtlich des Brandverhaltens, die der Schaumstoff später erfüllen muß. Im allgemeinen wird der Polyurethan-Schaum mit der 0,1-bis 10-fachen Menge der Mischung behandelt, so daß seine Feststoffaufnahme 10-1000 % seines ursprünglichen Gewichts beträgt. Das Einbringen der Mischung erfolgt zweckmäßigerweise durch eine Tränkung des Polyurethan-Schaums, um eine vollständige Imprägnierung zu erhalten. Nach der Behandlung wird die im Polyurethan-Schaum enthaltene Feuchtigkeit durch Trocknen bei erhöhter Temperatur entfernt und das in den Polyurethan-Schaum eingebrachte Elastomer vernetzt.

Der somit schwer entflammbar ausgerüstete Polyurethan-Schaum wird nunmehr auch bei Temperaturen oberhalb 800°C eine stabile Form durch das verbleibende mineralische Gerüst behalten, so daß die ggf. darunterliegenden, herkömmlichen Polsterschichten durch die Flamme nicht angegriffen werden.

Bei Verwendung von Glasfasern als Füllstoff ergibt sich bei Einsatz des übrigen Anteils des flammhemmenden Additivs in Form von Aluminium-Oxid-Hydrat der Vorteil, daß das Glas praktisch im Schmelzfluß als hochviskoser Kleber das karbonisierte Latexgerüst bei höheren Temperaturen stabilisiert und damit einen optimalen Flammschutz darstellt.

Bei Verwendung von Blähton als Füllstoff kann auf Aluminium-Oxid-Hydrat ganz verzichtet werden, da dieser Blähton bei den auftretenden hohen Temperaturen allein ein ausreichendes mineralisches Gerüst bildet.

Wegen der erheblich höheren Flammresistenz des so behandelten Schaumstoffs ergibt sich der weitere Vorteil, daß bei einer Verwendung als Umhüllung für herkömmliche Polster diese flammfeste Umhüllung erheblich dünner gemacht werden kann, als das bisher üblich war, so daß dadurch das Polster sehr viel leichter wird, was insbesondere beispielsweise bei Fluggastsitzen von erheblichem Vorteil ist.

## Patentansprüche

1. Schwer entflammbarer, elastischer und offenzelliger Polyurethan-Schaumstoff, der mit einer Mischung aus einem Elastomer-Latex und einem flammhemmenden Additiv behandelt ist, das im Bereich 0 bis 80 Gew.-% aus Aluminium-Oxid-Hydrat besteht, dadurch gekennzeichnet, daß das flammhemmende Additiv einen Anteil von mindestens 20 Gew.-% aus einem Füllstoff in Form von Blähton oder Mikroglaskugeln bzw. Kurzglasfasern in einer solchen Zusammensetzung aufweist, daß in einem Temperaturbereich zwischen 300 und 800 °C ein Schmelz- oder Sinterprozeß abläuft.

2. Polyurethan-Schaumstoff nach Anspruch 1, dadurch gekennzeichnet, daß Blähton als alleiniges flammhemmendes Additiv eingesetzt ist.

3. Verwendung eines schwer entflammbaren Polyurethan-Schaumstoffes, der nach Anspruch 1 oder 2 hergestellt ist, in dünnen Bahnen als Abdeckmaterial für hochelastische Schaumstoff-Polster.

## Claims

1. Flame resistant, elastic and open-cell polyurethane foam which is treated with a mixture of an elastomer latex and a flame retardant additive, which consists of 0 to 80 wt.% alumina hydrate, characterized in that the flame retardant additive contains at least 20 wt.% of a filler in the form of expanded clay or microglass beads or chopped glass fibre in such a composition that within a temperature range between 300 and 800°C a melting or sintering process occurs.

2. Polyurethane foam according to claim 1, characterized in that expanded clay is used as the sole flame retardant additive.

3. Use of a flame resistant polyurethane foam produced according to claim 1 or 2 in thin webs as covering material for highly elastic foam upholstery.

## Revendications

1. Mousse de polyuréthanne difficilement inflammable, élastique et à cellules ouvertes, qui est traitée par un mélange d'un latex élastomère et d'un additif retardateur de combustion constitué, pour 0 à 90 % en poids, d'hydrate d'oxyde d'aluminium, caractérisée en ce que l'additif retardateur de combustion comporte une proportion d'au moins 20 % en poids d'une charge sous forme d'argile expansée ou de billes de verre microscopiques ou de fibres de verre courtes en une composition telle qu'un processus de fusion ou de frittage a lieu dans un intervalle de température compris entre 300 et 800°C.

2. Mousse de polyuréthanne suivant la revendication 1, caractérisée en ce que l'argile expansée est utilisée comme seul additif retardateur de combustion.

3. Utilisation d'une mousse de polyuréthanne difficilement inflammable, préparée suivant la revendication 1 ou 2, en bande mince, comme matière de recouvrement de coussin en mousse très élastique.
